# EUROPÄISCHE PATENTANMELDUNG

(11) **EP 4 585 495 A1**
(43) Veröffentlichungstag der Anmeldung: **16.07.2025**
(21) Anmeldenummer: 24222038.2
(22) Anmeldetag: 20.12.2024
(51) Int. Cl.: B62D 15/02

(54) **VERFAHREN UND VORRICHTUNG ZUR LÄNGSFÜHRUNG EINES KRAFTFAHRZEUGS**

(30) Priorität: 11.01.2024 DE 102024200245
(71) Anmelder: VOLKSWAGEN AG, 38440 Wolfsburg (DE)
(72) Erfinder: Münning, Dr. Daniel, 38440 Wolfsburg (DE); Kaste, Dr. Jonas, 38440 Wolfsburg (DE); Oschlies, Dr. Hendrik, 38440 Wolfsburg (DE)

(57) **Zusammenfassung**

Die Erfindung betrifft ein Verfahren und eine Vorrichtung (1) zur Querführung eines Kraftfahrzeugs, wobei die Vorrichtung (1) mindestens ein Assistenzsystem (2) und mindestens eine Umfeldsensorik (3) und/oder eine Datenbasis von Schwarmdaten aufweist oder auf diese zugreifen kann, wobei die Vorrichtung (1) derart ausgebildet ist, anhand der Daten der mindestens einen Umfeldsensorik (3) und/oder der Schwarmdaten Fahrspurbegrenzungen (10) zu erfassen, wobei das Assistenzsystem (2) derart ausgebildet ist, anhand der Daten der mindestens einen Umfeldsensorik (3) und/oder der Schwarmdaten Lenkanweisungen für ein Lenksystem zu erzeugen, um das Kraftfahrzeug auf einer Soll-Trajektorie (8) des Assistenzsystems (2) zu halten, wobei der Kraftfahrzeugführer eine Anpassung der Soll-Trajektorie (8) vornehmen kann, wobei dann das Assistenzsystem (2) Lenkanweisungen für das Lenksystem in Abhängigkeit der Daten der mindestens einen Umfeldsensorik (3) und/oder der Schwarmdaten erzeugt, um das Kraftfahrzeug auf dieser angepassten Soll-Trajektorie (11) zu halten, wobei die Vorrichtung (1) weiter derart ausgebildet ist, Bereiche (ODD) zu erfassen, in denen dem Kraftfahrzeugführer erlaubt ist, die Hände von einer Lenkhandhabe zu nehmen, wobei die Vorrichtung (1) mindestens eine Sensorik (4) aufweist, die derart ausgebildet ist zu erfassen, ob der Kraftfahrzeugführer die Hände von der Lenkhandhabe genommen hat, wobei das Assistenzsystem (2) derart ausgebildet ist, dass bei Erfassen von keinen Händen an der Lenkhandhabe innerhalb eines Bereiches (ODD) von der angepassten Soll-Trajektorie (11) auf eine Soll-Trajektorie (8) des Assistenzsystems (2) umgeschaltet wird und entsprechende Lenkanweisungen an das Lenksystem übermittelt werden oder dass bei Einfahren in einen Bereich (ODD) automatisch von der angepassten Soll-Trajektorie (11) auf eine Soll-Trajektorie (8) des Assistenzsystems (2) umgeschaltet wird.

## Beschreibung

Die Erfindung betrifft ein Verfahren und eine Vorrichtung zur Querführung eines Kraftfahrzeugs.

Es sind verschiedene Verfahren zur assistierten oder autonomen Querführung eines Kraftfahrzeugs bekannt, wie beispielsweise Lane Keeping Assistance-Systeme. Dabei erfasst das System mittels einer Umfeldsensorik Fahrspurbegrenzungen und erzeugt Lenkmomente, um das Kraftfahrzeug in der Fahrspur zu halten. Typischerweise versucht das System das Kraftfahrzeug in der Fahrspurmitte zu halten, wobei bei Kurvenfahrten hiervon abgewichen werden kann und z.B. stärker nach innen in die Kurve gelenkt werden kann. Weiter ist es bereits bekannt, dass der Kraftfahrzeugführer diese Soll-Trajektorie in gewissen Grenzen anpassen kann, sodass die Soll-Trajektorie nicht in der Fahrspurmitte liegt, sondern einige Zentimeter links oder rechts zur Fahrspurmitte versetzt.

Weiter ist es bereits vorgeschlagen worden, spezielle Bereiche zu definieren, in denen eine größere Assistenz ermöglicht werden soll. Solche Bereiche werden auch als ODDs (Operational Design Domain) bezeichnet. Diese zeichnen sich üblicherweise durch gut erkennbare Fahrspurbegrenzungen und einen relativ geraden und übersichtlichen Streckenverlauf aus. Für Fahrten innerhalb einer solchen ODD wird dem Kraftfahrzeugführer erlaubt, die Hände von einer Lenkhandhabe zu nehmen, wobei dann das System vollständig autonom die Querführung übernimmt. Dabei erfolgt dann die Fahrerüberwachung über ein alternatives System, beispielsweise eine Innenraum-Fahrerüberwachung.

Der Erfindung liegt das technische Problem zugrunde, ein Verfahren zur Verfügung zu stellen, um ein solches hands-off-Fahren in die bestehenden Verfahren zu integrieren, sowie eine geeignete Vorrichtung zu schaffen.

Die Lösung des technischen Problems ergibt sich durch ein Verfahren mit den Merkmalen des Anspruchs 1 sowie eine Vorrichtung mit den Merkmalen des Anspruchs 6. Weitere vorteilhafte Ausgestaltungen der Erfindung ergeben sich aus den Unteransprüchen.

Das Verfahren zur Querführung eines Kraftfahrzeugs erfolgt mittels eines Assistenzsystems, wobei mittels mindestens einer Umfeldsensorik und/oder Schwarmdaten Fahrspurbegrenzungen erfasst werden, wobei das Assistenzsystem anhand der Daten der mindestens einen Umfeldsensorik und/oder der Schwarmdaten Lenkanweisungen für ein Lenksystem erzeugt, um das Kraftfahrzeug auf einer Soll-Trajektorie des Assistenzsystems zu halten. Die Lenkanweisungen können beispielsweise Krümmungen, Zahnstangenpositionen oder Lenkwinkel sein, die dann von dem Lenksystem umgesetzt werden. Die Umfeldsensorik umfasst vorzugsweise mindestens eine Kamera. Ergänzend oder alternativ kann die Umfeldsensorik auch Radar-, Lidar- und/oder Ultraschallsensoren aufweisen. Weiter kann der Kraftfahrzeugführer eine Anpassung der Soll-Trajektorie vornehmen, wobei dann das Assistenzsystem Lenkanweisungen für das Lenksystem in Abhängigkeit der Daten der mindestens einen Umfeldsensorik und/oder der Schwarmdaten erzeugt, um das Kraftfahrzeug auf dieser angepassten Soll-Trajektorie zu halten. Diese Anpassung kann auf verschiedene Weisen erfolgen, die auch alternativ dem Kraftfahrzeugführer zur Verfügung gestellt werden können. Beispielsweise kann der Kraftfahrzeugführer die Anpassung alphanumerisch eingeben oder mittels eines Tasters. Weiter kann die Anpassung angelernt werden, indem der Kraftfahrzeugführer für eine vorgegebene Zeit oder Strecke das Kraftfahrzeug entgegen der Soll-Trajektorie des Assistenzsystems auf der gewünschten angepassten Soll-Trajektorie hält.

Weiter werden Bereiche erfasst, in denen dem Kraftfahrzeugführer erlaubt ist, die Hände von einer Lenkhandhabe zu nehmen. Dabei kann vorgesehen sein, dass diese Bereiche in einer digitalen Karte abgelegt sind oder von einem Server zur Verfügung gestellt werden. Ergänzend oder zusätzlich kann auch vorgesehen sein, dass die Umfeldsensorik solche Bereiche ermittelt. Weiter wird mittels mindestens einer Sensorik erfasst, ob der Kraftfahrzeugführer die Hände von der Lenkhandhabe genommen hat. Die Sensorik kann beispielsweise als kapazitives Lenkrad oder als Innenraumkamera ausgebildet sein. Ergänzend oder alternativ kann eine hands-on-/ hands-off-Erkennung auch mittels der Daten eines Lenkmomentsensors erfolgen.

Erfasst nun innerhalb eines solchen Bereiches (ODD) das Assistenzsystem, dass der Kraftfahrzeugführer die Hände von der Lenkhandhabe genommen hat, so schaltet das Assistenzsystem von der angepassten Soll-Trajektorie auf eine Soll-Trajektorie des Assistenzsystems um. Hierdurch regelt dann das Assistenzsystem auf eine Trajektorie, die für das automatisierte Fahren besser handhabbar ist. Dabei sei angemerkt, dass dabei diese Soll-Trajektorie des Assistenzsystems nicht zwangsweise die zuvor genannte Soll-Trajektorie sein muss. So kann beispielsweise die Soll-Trajektorie des Assistenzsystems innerhalb des Bereiches eine von der angepassten Soll-Trajektorie abhängige Soll-Trajektorie sein. Die Umschaltung bewirkt dann vorzugsweise, dass das Assistenzsystem innerhalb einer vorgegebenen Zeit (z.B. 5 Sekunden) oder einer vorgegebenen Strecke (z.B. 100 m) die Lenkanweisungen so anpasst, dass das Kraftfahrzeug von der angepassten Soll-Trajektorie auf die Soll-Trajektorie des Assistenzsystems gelenkt wird. Dieser sanfte Übergang vermittelt einen hohen Fahrerkomfort und führt zu weniger Irritationen beim Kraftfahrzeugführer aufgrund des Wechsels der Soll-Trajektorie.

Alternativ kann vorgesehen sein, dass das Assistenzsystem automatisch beim Einfahren in den Bereich auf eine Soll-Trajektorie des Assistenzsystems umschaltet, also unabhängig davon, ob der Kraftfahrzeugführer die Hände von der Lenkhandhabe genommen hat oder auch nicht.

Der Vorteil der ersten Alternative ist, dass der Kraftfahrzeugführer nicht übersteuert wird und solange wie möglich seine angepasste Soll-Trajektorie befahren kann.

Der Vorteil der zweiten Alternative ist die einfache und schnelle Umschaltung.

Dabei erfolgt die Umschaltung gemäß der ersten Alternative, also nur, wenn ein hands-off erfasst wurde.

In einer Ausführungsform wird eine angepasste Soll-Trajektorie nach Umschaltung auf eine Soll-Trajektorie des Assistenzsystems gelöscht. Der Vorteil ist, dass dies Irritationen des Kraftfahrzeugführers verhindert, wenn dieser nur situativ die Soll-Trajektorie angepasst hatte (z.B. aufgrund einer bestimmten Verkehrssituation), sodass dieser überrascht werden könnte, wenn nach einer hands-off-Fahrt auf der Soll-Trajektorie des Assistenzsystems wieder auf die angepasste Soll-Trajektorie umgeschaltet wird, obwohl die ursächliche Verkehrssituation nicht mehr vorliegt.

Allerdings ist es auch möglich, die angepasste Soll-Trajektorie zu speichern und diese nach Beendigung der hands-off-Fahrt wieder automatisch zuzuschalten, beispielsweise weil es sich bei der angepassten Soll-Trajektorie um eine allgemein vom Kraftfahrzeug präferierte Soll-Trajektorie handelt (z.B. immer leicht außenmittig rechts in der Fahrspur fahren).

Dabei kann vorgesehen sein, dass der Kraftfahrzeugführer eine Auswahlmöglichkeit hat und einstellen kann, ob die angepasste Soll-Trajektorie verworfen bzw. gelöscht werden soll oder aber abgespeichert werden soll. So kann sich der Kraftfahrzeugführer das gewünschte Verhalten nach seinen Präferenzen einstellen.

In einer weiteren Ausführungsform kann der Kraftfahrzeugführer innerhalb des Bereiches die Soll-Trajektorie des Assistenzsystems oder eine angepasste Soll-Trajektorie anpassen, wenn dieser die Hände an der Lenkhandhabe hat.

In einer weiteren Ausführungsform unterscheidet sich mindestens eine Anpassung der Soll-Trajektorie innerhalb eines Bereiches in einem Parameter von einer Anpassung der Soll-Trajektorie außerhalb des Bereiches. So kann beispielsweise das Anpassen von einer ersten angepassten Soll-Trajektorie auf eine zweite angepasste Soll-Trajektorie so wie außerhalb des Bereiches sein, wohingegen das Anpassen von einer Soll-Trajektorie des Assistenzsystems nach einer hands-off-Fahrt auf eine neue angepasste Soll-Trajektorie anders ist. Beispielsweise muss der Kraftfahrzeugführer für eine längere Zeit oder Strecke gegen die Soll-Trajektorie des Assistenzsystems lenken, bevor diese als angepasste Soll-Trajektorie übernommen wird. Auch die umgekehrte Variante ist möglich, d.h. die notwendige Zeit oder Strecke sind kürzer.

In einer weiteren Ausführungsform ist vorgesehen, dass, wenn außerhalb eines Bereiches erfasst wird, dass der Kraftfahrzeugführer die Hände von der Lenkhandhabe genommen hat, die angepasste Soll-Trajektorie beibehalten wird, wobei der Kraftfahrzeugführer aufgefordert wird, die Lenkhandhabe zu greifen. Sollte der Kraftfahrzeugführer nach einer vorgegebenen Zeit die Hände nicht wieder auf die Lenkhandhabe legen, so kann auf eine Soll-Trajektorie des Assistenzsystems gewechselt werden und ein Nothalt vorbereitet werden.

Die Vorrichtung zur Querführung eines Kraftfahrzeugs weist mindestes ein Assistenzsystem und mindestens eine Umfeldsensorik und/oder eine Datenbasis von Schwarmdaten auf oder kann auf diese zugreifen. Beispielsweise sind die Schwarmdaten in einem Cloud-Server hinterlegt, wobei die Vorrichtung die benötigten Schwarmdaten für seine aktuelle Umgebung abruft. Die Vorrichtung ist derart ausgebildet, anhand der Daten der mindestens einen Umfeldsensorik und/oder der Schwarmdaten Fahrspurbegrenzungen zu erfassen, wobei das Assistenzsystem derart ausgebildet ist, anhand der Daten der mindestens einen Umfeldsensorik und/oder der Schwarmdaten Lenkanweisungen für ein Lenksystem zu erzeugen, um das Kraftfahrzeug auf einer Soll-Trajektorie des Assistenzsystems zu halten. Weiter ist die Vorrichtung derart ausgebildet, dass der Kraftfahrzeugführer eine Anpassung der Soll-Trajektorie vorsehen kann, wobei dann das Assistenzsystem Lenkanweisungen für das Lenksystem in Abhängigkeit der Daten der mindestens einen Umfeldsensorik und/oder der Schwarmdaten erzeugt, um das Kraftfahrzeug auf dieser angepassten Soll-Trajektorie zu halten. Weiter ist die Vorrichtung derart ausgebildet, Bereiche zu erfassen, in denen dem Kraftfahrzeugführer erlaubt ist, die Hände von einer Lenkhandhabe zu nehmen (hands-off bzw. hands-free), wobei die Vorrichtung mindestens eine Sensorik aufweist, die derart ausgebildet ist zu erfassen, ob der Kraftfahrzeugführer die Hände von der Lenkhandhabe genommen hat. Das Assistenzsystem ist weiter derart ausgebildet, dass bei Erfassen von keinen Händen an der Lenkhandhabe innerhalb eines Bereiches von der angepassten Soll-Trajektorie auf eine Soll-Trajektorie des Assistenzsystems umgeschaltet wird und entsprechende Lenkanweisungen an das Lenksystem übermittelt werden. Alternativ kann vorgesehen sein, dass bei Einfahren in einen Bereich automatisch von der angepassten Soll-Trajektorie auf eine Soll-Trajektorie des Assistenzsystems umgeschaltet wird, also auch dann, wenn der Kraftfahrzeugführer die Hände an der Lenkhandhabe hat.

Hinsichtlich der weiteren Ausgestaltung der Vorrichtung wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein schematisches Blockschaltbild einer Vorrichtung zur Querführung eines Kraftfahrzeugs,
- Fig. 2: eine schematische, beispielhafte Darstellung einer Soll-Trajektorie eines Assistenzsystems und einer angepassten Soll-Trajektorie eines Kraftfahrzeugführers und
- Fig. 3: ein Flussdiagramm eines Verfahrens zur Querführung eines Kraftfahrzeugs.

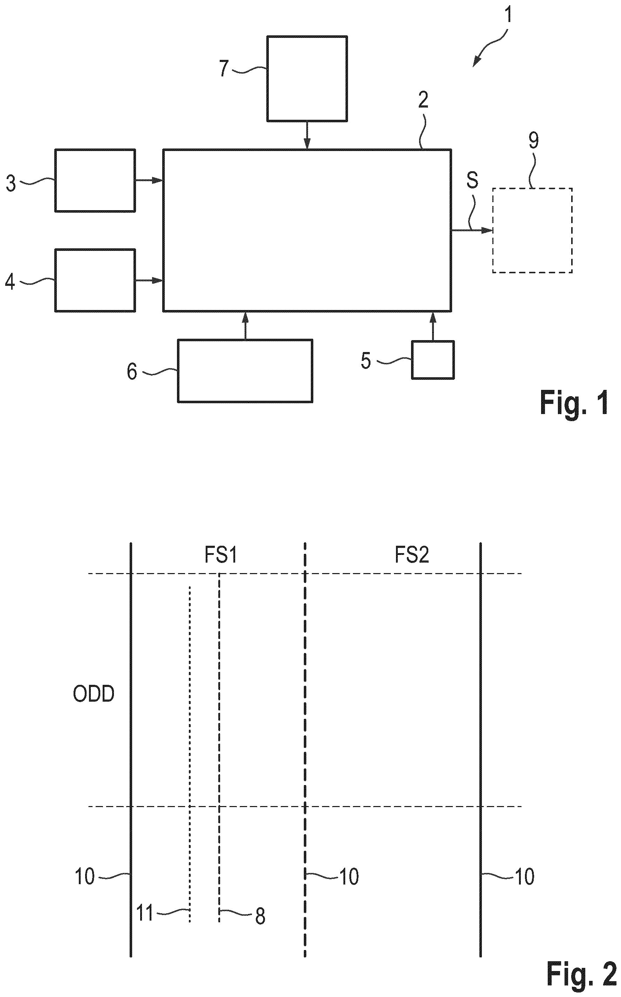

In der Fig. 1 ist stark schematisch ein Blockschaltbild einer Vorrichtung 1 zur Querführung eines Kraftfahrzeugs dargestellt. Die Vorrichtung 1 umfasst ein Assistenzsystem 2, mindestens eine Umfeldsensorik 3, mindestens eine Sensorik 4 zur Erkennung, ob der Kraftfahrzeugführer die Hände an einer Lenkhandhabe hat (hands-on-/hands-off-Erkennung), eine Einheit 5 zur Positionsbestimmung und eine Eingabeeinheit 6. Weiter dargestellt ist eine Datenbasis 7, in der Informationen über Bereiche (ODD) abgelegt sind, in denen der Kraftfahrzeugführer die Hände von der Lenkhandhabe nehmen darf. Das Assistenzsystem 2 ist derart ausgebildet, Lenkanweisungen zu erzeugen, um das Kraftfahrzeug auf einer Soll-Trajektorie 8 (siehe Fig. 2) des Assistenzsystems 2 zu halten. Hierzu erzeugt das Assistenzsystem 2 Steuerbefehle S, die dann von einem Lenksystem 9 des Kraftfahrzeugs umgesetzt werden. Die Steuerbefehle S sind beispielsweise eine Krümmung oder eine Zahnstangenposition.

Die Funktionsweise der Vorrichtung 1 soll nun anhand der Fig. 2 näher erläutert werden, wobei beispielhaft zwei Fahrspuren FS1, FS2 einer Autobahn dargestellt sind. Mittels der mindestens einen Umfeldsensorik 3 erfasst die Vorrichtung 1 Fahrspurbegrenzungen 10. Das nicht dargestellte Kraftfahrzeug befindet sich dabei auf der linken Fahrspur FS1. Das Assistenzsystem 2 ist derart ausgebildet, dass in Abhängigkeit der erfassten Fahrspurbegrenzungen 10 eine Soll-Trajektorie 8 des Assistenzsystems 2 für das Kraftfahrzeug berechnet wird, die beispielsweise in der Mitte der Fahrspur FS1 liegt. Das Assistenzsystem 2 erzeugt dann Lenkmomente, um das Kraftfahrzeug auf dieser Soll-Trajektorie 8 zu halten. Weiter kann der Kraftfahrzeugführer über die Eingabeeinheit 6 dem Assistenzsystem 2 eine angepasste Soll-Trajektorie 11 übermitteln. Diese angepasste Soll-Trajektorie 11 verläuft um einen vom Kraftfahrzeugführer vorgegebenen Abstand weiter links, d.h. das Kraftfahrzeug fährt dichter an der linken Fahrspurbegrenzung 10. Die Übermittlung der angepassten Soll-Trajektorie 11 kann dabei auf verschiedene Arten erfolgen. Beispielsweise wird die angepasste Soll-Trajektorie 11 angelernt, in dem der Kraftfahrzeugführer das Kraftfahrzeug für eine vorbestimmte Zeit oder Streckenlänge aktiv gegen das Assistenzsystem 2 auf die angepasste Soll-Trajektorie 11 lenkt. Alternativ kann der Kraftfahrzeugführer Abstand und Richtung (links oder rechts) zur Soll-Trajektorie 8 des Assistenzsystems 2 über die Eingabeeinheit 6 eingeben. Ist das Assistenzsystem 2 aktiv, so werden dann von dem Assistenzsystem 2 Lenkanweisungen generiert, um das Kraftfahrzeug auf der angepassten Soll-Trajektorie 11 zu halten.

Weiter erfolgt mittels der Sensorik 4 eine hands-on-/hands-off-Erkennung, also ob der Kraftfahrzeugführer seine Hände an der Lenkhandhabe hat oder nicht. Nimmt der Kraftfahrzeugführer die Hände von der Lenkhandhabe, so wird dieser vom Assistenzsystem 2 aufgefordert (beispielsweise durch eine akustische und/oder visuelle Warnmeldung), die Lenkhandhabe wieder zu greifen, wobei das Assistenzsystem 2 aber weiter versucht, die angepasste Soll-Trajektorie 11 zu halten. Erfolgt nach einer vorgegebenen Zeit (z.B. 10 Sekunden) noch immer keine Übernahme durch den Kraftfahrzeugführer, so schaltet das Assistenzsystem 2 auf die Soll-Trajektorie 8 um und leitet gegebenenfalls einen Nothalt ein.

In bestimmten Bereichen ODD (in Fig. 2 durch zwei waagerechte Linien angedeutet), die in der Datenbasis 7 hinterlegt sind, ist ein hands-off-Betrieb zugelassen. Die Datenbasis 7 kann dabei in einem Speicher im Kraftfahrzeug sein. Alternativ kann diese auch durch einen Service-Anbieter bereitgehalten werden und vom Kraftfahrzeug abgerufen werden. Anhand der Daten der Einheit 5 kann sich das Kraftfahrzeug lokalisieren und feststellen, ob das Kraftfahrzeug sich einem solchen Bereich ODD nähert. Der Kraftfahrzeugführer kann dann entsprechend beispielsweise optisch und/oder akustisch informiert werden, sodass dieser nun weiß, dass ein hands-off-Betrieb zugelassen wird. Nimmt dann der Kraftfahrzeugführer die Hände von der Lenkhandhabe, so wird dies von der Sensorik 4 erfasst und das Assistenzsystem 2 schaltet dann auf die Soll-Trajektorie 8 des Assistenzsystems 2 für das Kraftfahrzeug um. Am Ende des Bereiches ODD wird dann der Kraftfahrzeugführer wieder aufgefordert, die Lenkhandhabe zu übernehmen, wobei die Soll-Trajektorie 8 des Assistenzsystems 2 beibehalten werden kann. Die Soll-Trajektorie 8, die in dem Bereich ODD im hands-off-Betrieb abgefahren wird, ist vorzugsweise die ursprüngliche Soll-Trajektorie 8 des Assistenzsystems 2, was aber nicht zwingend ist. So kann auch eine modifizierte Soll-Trajektorie des Assistenzsystems 2 abgefahren werden, die die Fahrpräferenzen der angepasste Soll-Trajektorie 11 berücksichtigt.

Die Vorrichtung 1 verhält sich also verschieden, ob eine hands-off-Erkennung innerhalb oder außerhalb des Bereiches ODD erfasst wird.

Weiter kann vorgesehen sein, dass, wenn der Kraftfahrzeugführer zunächst im Bereich ODD die Hände von der Lenkhandhabe genommen hat (Umschaltung auf Soll-Trajektorie 8), dann beim erneuten Ergreifen der Lenkhandhabe innerhalb des Bereichs ODD die Soll-Trajektorie 8 wieder anpassen kann, sodass der Kraftfahrzeugführer mit Händen an der Lenkhandhabe wieder eine angepasste Soll-Trajektorie 11 abfahren kann.

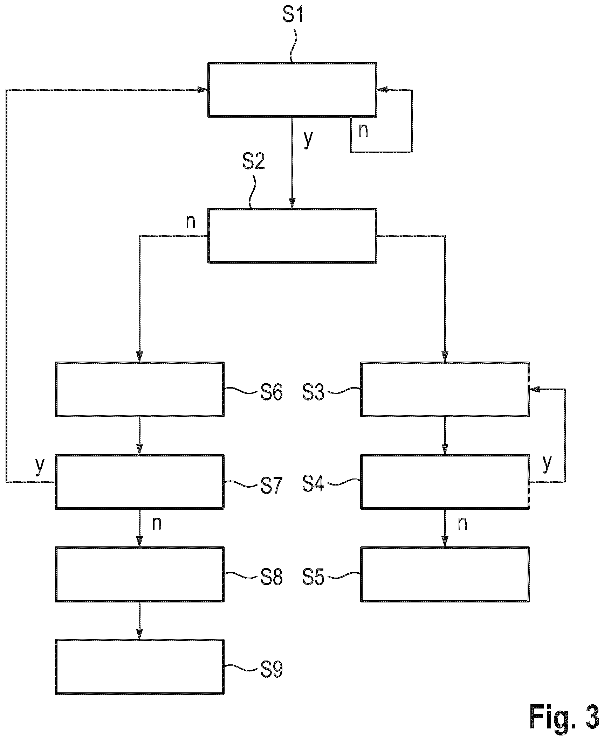

In der Fig. 3 ist ein Flussdiagramm des Verfahrens dargestellt. Dabei wird in einem ersten Schritt S1 überprüft, ob der Kraftfahrzeugführer die Hände von der Lenkhandhabe genommen hat. Wird dies bejaht, so wird in einem zweiten Schritt S2 abgefragt, ob sich das Kraftfahrzeug in einem Bereich ODD befindet, in dem es dem Kraftfahrzeugführer gestattet ist, die Hände von der Lenkhandhabe zu nehmen. Ist dies der Fall, so wird in einem dritten Schritt S3 von einer angepassten Soll-Trajektorie 11 auf eine Soll-Trajektorie 8 des Assistenzsystems 2 umgeschaltet (siehe auch Fig. 2). Dabei wird in einem vierten Schritt S4 überprüft, ob sich das Kraftfahrzeug weiter in dem Bereich ODD befindet. Wird dies verneint, so wird in einem fünften Schritt S5 der Kraftfahrzeugführer aufgefordert, wieder die Lenkhandhabe zu übernehmen. Wurde hingegen im zweiten Schritt S2 festgestellt, dass sich das Kraftfahrzeug nicht in einem Bereich ODD befindet, in dem es erlaubt ist, die Hände von der Lenkhandhabe zu nehmen, so wird der Kraftfahrzeugführer in einem sechsten Schritt S6 aufgefordert, die Hände wieder an die Lenkhandhabe zu nehmen. In einem siebten Schritt S7 wird überprüft, ob der Kraftfahrzeugführer der Aufforderung nachgekommen ist. Ist dies der Fall, springt das Verfahren zum ersten Schritt S1 zurück. Ansonsten wird in einem achten Schritt S8 auf die Soll-Trajektorie 8 des Assistenzsystems 2 umgeschaltet und in einem neunten Schritt S9 ein Nothalt vorbereitet.

### Bezugszeichenliste

- 1: Vorrichtung
- 2: Assistenzsystem
- 3: Umfeldsensorik
- 4: Sensorik
- 5: Einheit
- 6: Eingabeeinheit
- 7: Datenbasis
- 8: Soll-Trajektorie
- 9: Lenksystem
- 10: Fahrspurbegrenzung
- 11: angepasste Soll-Trajektorie
- S: Steuerbefehl
- FS1, FS2: Fahrspuren
- ODD: Bereich
- S1 - S9: Schritte

## Patentansprüche

1. Verfahren zur Querführung eines Kraftfahrzeugs mittels eines Assistenzsystems (2), wobei mittels mindestens einer Umfeldsensorik (3) und/oder Schwarmdaten Fahrspurbegrenzungen (10) erfasst werden, wobei das Assistenzsystem (2) anhand der Daten der mindestens einen Umfeldsensorik (3) und/oder der Schwarmdaten Lenkanweisungen für ein Lenksystem erzeugt, um das Kraftfahrzeug auf einer Soll-Trajektorie (8) des Assistenzsystems (2) zu halten, wobei der Kraftfahrzeugführer eine Anpassung der Soll-Trajektorie (8) vornehmen kann, wobei dann das Assistenzsystem (2) Lenkanweisungen für das Lenksystem in Abhängigkeit der Daten der mindestens einen Umfeldsensorik (3) und/oder der Schwarmdaten erzeugt, um das Kraftfahrzeug auf dieser angepassten Soll-Trajektorie (11) zu halten, wobei Bereiche (ODD) erfasst werden, in denen dem Kraftfahrzeugführer erlaubt ist, die Hände von einer Lenkhandhabe zu nehmen, wobei mittels mindestens einer Sensorik (4) erfasst wird, ob der Kraftfahrzeugführer die Hände von der Lenkhandhabe genommen hat, wobei das Assistenzsystem (2) bei Erfassen von keinen Händen an der Lenkhandhabe innerhalb eines Bereiches (ODD) von der angepassten Soll-Trajektorie (11) auf eine Soll-Trajektorie (8) des Assistenzsystems (2) umschaltet und entsprechende Lenkanweisungen an das Lenksystem übermittelt oder dass bei Einfahren in einen Bereich (ODD) automatisch von der angepassten Soll-Trajektorie (11) auf eine Soll-Trajektorie (8) des Assistenzsystems (2) umgeschaltet wird.

2. Verfahren nach Anspruch 1, **dadurch gekennzeichnet, dass** eine angepasste Soll-Trajektorie (11) nach Umschaltung auf eine Soll-Trajektorie (8) des Assistenzsystems (2) gelöscht wird.

3. Verfahren nach Anspruch 1 oder 2, **dadurch gekennzeichnet, dass** der Kraftfahrzeugführer innerhalb des Bereiches (ODD) die Soll-Trajektorie (8) des Assistenzsystems (2) oder eine angepasste Soll-Trajektorie (11) anpassen kann, wenn dieser die Hände an der Lenkhandhabe hat.

4. Verfahren nach Anspruch 3, **dadurch gekennzeichnet, dass** mindestens eine Anpassung der Soll-Trajektorie (8, 11) innerhalb eines Bereiches (ODD) sich in mindestens einem Parameter von einer Anpassung der Soll-Trajektorie (8) außerhalb des Bereiches (ODD) unterscheidet.

5. Verfahren nach einem der vorangegangenen Ansprüche, **dadurch gekennzeichnet, dass**, wenn außerhalb eines Bereiches (ODD) erfasst wird, dass der Kraftfahrzeugführer die Hände von der Lenkhandhabe genommen hat, die angepasste Soll-Trajektorie (11) beibehalten wird, wobei der Kraftfahrzeugführer aufgefordert wird, die Lenkhandhabe zu greifen.

6. Vorrichtung (1) zur Querführung eines Kraftfahrzeugs, wobei die Vorrichtung (1) mindestens ein Assistenzsystem (2) und mindestens eine Umfeldsensorik (3) und/oder eine Datenbasis von Schwarmdaten aufweist oder auf diese zugreifen kann, wobei die Vorrichtung (1) derart ausgebildet ist, anhand der Daten der mindestens einen Umfeldsensorik (3) und/oder der Schwarmdaten Fahrspurbegrenzungen (10) zu erfassen, wobei das Assistenzsystem (2) derart ausgebildet ist, anhand der Daten der mindestens einen Umfeldsensorik (3) und/oder der Schwarmdaten Lenkanweisungen für ein Lenksystem zu erzeugen, um das Kraftfahrzeug auf einer Soll-Trajektorie (8) des Assistenzsystems (2) zu halten, wobei der Kraftfahrzeugführer eine Anpassung der Soll-Trajektorie (8) vornehmen kann, wobei dann das Assistenzsystem (2) Lenkanweisungen für das Lenksystem in Abhängigkeit der Daten der mindestens einen Umfeldsensorik (3) und/oder der Schwarmdaten erzeugt, um das Kraftfahrzeug auf dieser angepassten Soll-Trajektorie (11) zu halten, wobei die Vorrichtung (1) weiter derart ausgebildet ist, Bereiche (ODD) zu erfassen, in denen dem Kraftfahrzeugführer erlaubt ist, die Hände von einer Lenkhandhabe zu nehmen, wobei die Vorrichtung (1) mindestens eine Sensorik (4) aufweist, die derart ausgebildet ist zu erfassen, ob der Kraftfahrzeugführer die Hände von der Lenkhandhabe genommen hat, wobei das Assistenzsystem (2) derart ausgebildet ist, dass bei Erfassen von keinen Händen an der Lenkhandhabe innerhalb eines Bereiches (ODD) von der angepassten Soll-Trajektorie (11) auf eine Soll-Trajektorie (8) des Assistenzsystems (2) umgeschaltet wird und entsprechende Lenkanweisungen an das Lenksystem übermittelt werden oder dass bei Einfahren in einen Bereich (ODD) automatisch von der angepassten Soll-Trajektorie (11) auf eine Soll-Trajektorie (8) des Assistenzsystems (2) umgeschaltet wird.

7. Vorrichtung nach Anspruch 6, **dadurch gekennzeichnet, dass** das Assistenzsystem (2) derart ausgebildet ist, dass eine angepasste Soll-Trajektorie (11) nach Umschaltung auf eine Soll-Trajektorie (8) des Assistenzsystems (2) gelöscht wird.

8. Vorrichtung nach Anspruch 6 oder 7, **dadurch gekennzeichnet, dass** das Assistenzsystem (2) derart ausgebildet ist, dass der Kraftfahrzeugführer innerhalb des Bereiches (ODD) die Soll-Trajektorie (8) des Assistenzsystems (2) oder eine angepasste Soll-Trajektorie (11) anzupassen, wenn dieser die Hände an der Lenkhandhabe hat.

9. Vorrichtung nach Anspruch 8, **dadurch gekennzeichnet, dass** das Assistenzsystem (2) derart ausgebildet ist, dass mindestens eine Anpassung der Soll-Trajektorie (8, 11) innerhalb eines Bereiches (ODD) sich in mindestens einem Parameter von einer Anpassung der Soll-Trajektorie (8) außerhalb des Bereiches (ODD) unterscheidet.

10. Vorrichtung nach einem der Ansprüche 6 bis 9, **dadurch gekennzeichnet, dass** das Assistenzsystem (2) derart ausgebildet ist, dass, wenn außerhalb eines Bereiches (ODD) erfasst wird, dass der Kraftfahrzeugführer die Hände von der Lenkhandhabe genommen hat, die angepasste Soll-Trajektorie (11) beibehalten wird, wobei der Kraftfahrzeugführer aufgefordert wird, die Lenkhandhabe zu greifen.
